# EUROPEAN PATENT SPECIFICATION

(11) **EP 3 396 348 B1**
(45) Date of publication and mention of the grant of the patent: **10.05.2023**
(21) Application number: 18169637.8
(22) Date of filing: 26.04.2018
(51) Int. Cl.: G01M 5/00, G01L 5/00, H02G 1/02, H02G 7/00

(54) **METHOD FOR DETERMINING ADDITIONAL MECHANICAL LOADS OF A TRAMSMISSION POWER LINE CONDUCTOR**
VERFAHREN ZUR BESTIMMUNG ZUSÄTZLICHER MECHANISCHER BELASTUNGEN EINES ÜBERTRAGUNGSSTROMLEITERS
PROCÉDÉ POUR LA DÉTERMINATION DE CHARGES MÉCANIQUES SUPPLÉMENTAIRES D'UN CONDUCTEUR DE LIGNE DE PUISSANCE DE TRANSMISSION

(30) Priority: 26.04.2017 SI 201700119
(43) Date of publication of application: 31.10.2018
(73) Proprietor: OTLM, razvoj, proizvodnja in svetovanje, d.o.o., 1000 Ljublijana (SI)
(72) Inventor: Nenad, Dr. Gubeljak, 2103 Maribor (SI)
(74) Representative: VKK Patentanwälte PartG mbB

(56) References cited:
- EP-A1- 2 194 623
- WO-A2-2007/134022
- CN-U- 203 501 999
- US-A- 6 097 298
- US-A1- 2014 123 750

## Description

### The subject of the invention

The subject of the invention is a method for determining additional mechanical loads of transmission power line conductor on the basis of monitoring the change in the angle of inclination of the conductor and the measurements of conductor temperature as defined in claim 1. Furthermore, the method that, in addition to the calculation of tensile forces in the conductor and of the inclination of the conductor, enables also the determination of the value of the additional load of the conductor due to ice or a fallen tree on the basis of the recorded catenary geometry, depending on the current conductor temperature, the inclination of the conductor and the weather conditions at the location of the tramission power line.

### Technical problem

The technical problem solved by this invention is such a method for determining additional mechanical loads of a transmission power line conductor that will enable the calculation of forces in the conductor and of the sagging of the conductor at an optional point of span between two transmission power line towers, depending on the change in temperature. Also it will enable the control of a safe clearance distance, the calculation of tensile forces at the spot of attachment of the conductor to a console on the tower, furthermore, monitoring of the conductor geometry and of tensile forces in the conductor and determination of input data to define the time of melting of ice on the conductor. In addition, it will ensure safe operation of the transmission power line and monitoring of additional tensile forces in the conductor.

### Current state of the art

Several solutions of the calculation of the geometry of the catenary of a transmission power line conductor are known.

The equation developed by Prof. Dr. Milan Vidmar is known from theory; it is used for calculating tensile force and the inclination of transmission power line conductors, depending on temperature; it enables the calculation of a conductor if the temperature and, consequently, the clearance is changing. The determination of the inclination of the conductor if the attachment points of the conductor are not at the same height is based on the addition of the span that seemingly increases the span. The calculation is based on a uniform integral approach for determination of the equation of the conductor catenary for the entire span between two transmission power line towers. In calculations, the mechanical behaviour of the conductor is taken into consideration, depending on the force imposed upon the conductor and the extension of the conductor. The measurements are usually taken on a new, not yet used conductor in labs; also data provided by the conductors producer can be used for this purpose.

At the span, the behaviour of the conductor depends on the assembly length of the conductor and on the height differences between the points of attachment of the conductor to the corresponding transmission power line towers. In this, theoretically carried out equation, the deviations between the actual and the theoretical calculation are taken into consideration by introducing the constructive extension, which must be determined separately, depending on the observed span. At the same time the constructive span compensates the negligence of equation's parts of higher order.

There are several known solutions that enable the determination of the value of additional mechanical loads of the transmission power line directly in the terrain. One of the older solutions is based on the use of an additional dynamometer that directly connects the conductor and the isolator at the console and that enables the monitoring of the changes in the tensile force in the conductor. Some of these known solutions make it possible to use the dynamometer to measure both, tensile forces and the conductor temperature at the same time. Due to the changes in the air temperature, the conductor length and, consequently, also the tensile force in the conductor change. The weakness and deficiency of this solution is in the fact that it is based on two separate units, which requires an additional mounting act; in addition it is necessary to reconcile the measurements and to ensure the interconnection.

Another solution known to us makes it possible to measure, in addition to tensile forces and temperature, also the angle on the conductor at the attachment point; it is based on the use of an inclinometer. Direct calculation of the inclination of the conductor at a known distance within the span of the conductor catenary is included. It is usually difficult to measure the angle precisely, as the angle of the conductor is usually small, it can be smaller than 5°, the precision of the measurement amounts to +/-0.25°; because of this the calculation of tightening forces and, therefore, the calculated inclination of the conductor are not determined precisely. The uncertainty of the calculation is even larger if the conductor is more straight, i.e. if the inclination angle is smaller as in case of lower temperatures, which can result in shrinking of the conductor due to temperatures and, consequently, to the tightening of the conductor, which, in case of an additional load, can cause breakdown of the transmission power line without prior warning.

Furthermore, another known solution is the ASTROSE system, which is based on an autonomous network sensor for monitoring the conditions on the transmission power line and is intended for continous measurements of the conductor temperature, for measurements of the inclination of the conductor at the attachment spot and for measurements of weather conditions, e.g. of the ambient temperature, etc.

This known system makes it possible to monitor the geometry of the conductor at an individual span, where the measurement device is attached. The wireless interconnection between measurement devices, through several spans in a row, offers the data on the geometry of conductor catenaries to the operator in the operating centre. In this way, the system provides data on the sag, i.e. on the inclination of conductors and on safety heights at individual spans of conductors, i.e. at their critical points. Weakness and deficiency of this system is in the fact that it does not foresee, i.e. it does not calculate the thickness of the ice accumulated on the conductor within the transmission power line. Due to its susceptibility, the system can indicate the change in the angle of the position of the conductor due to the emerged ice, however, due to the dispersion of the angle measurements carried out with an inclinometer, the results are uncertain, and it is not possible to detect the accumulation of ice at an early stage and to monitor the changes in the thickness of the ice. As the operator does not know the thickness of the ice on the conductor at the time of measurement, he is limited when making the decision regarding the required ampacity to prevent further accumulation and to enable the melting of the ice. In relation to this it applies that the knowledge of the precise value of the ampacity in transmission power lines is of key importance for the stability of the global electricity distribution system.

Furthermore, according to patent document WE 102443, a method for system determination of thermical loads of a transmission power line is known, based on the measurements of the conductor temperature, on electrical loads at at least one point on the transmission power line as well as on taking the ambient temperature and the effective wind speed into consideration. The solution makes it possible to determine the permissible thermic load and the electric load of the conductor in view of the reserve sag or the safety height of the conductor from the ground or from the objects below the conductor.

This known method uses, i.e. calculates the values of the inclination of the conductor on the basis of mounting conditions; in relation to this, the extrapolated conductor temperature is taken into consideration as the starting point in case of the same meteorogical conditions when the conductor is not under power. The calculation is carried out for the entire temperature interval, taking the changes in electric/ohm resistance into consideration, from the current temperature to the highest permissible conductor temperature. As this solution takes only thermic loads into consideration, its weakness and deficiency is also in the fact that it does not consider the changes in tensile forces in case of accumulation of ice or wet snow or in case of other mechanical loads that have an impact upon the change in the inclination, i.e. upon the change in the safety height of the conductor.

Furthermore, according to patent document WO 2012/118523, a solution of thermic loading of a transmission power line and the analysis of the safety height using a local temperature sensor is known. The solution is presented as a method of determining a 3D geometry of the conductor catenary, using the LiDAR laser equipment in combination with the simultaneous contact, i.e. local measurement of the conductor temperature and of the ambient temperature. Based on more 3D measurements of the catenary geometry at various temperatures, an analysis is carried out to determine the inclination of the conductor and the safety heights, which are compared with other elements and objects in the route, e.g. vegetation, etc. As this known method uses only the results of the measurements carried out with the laser LiDAR system at the measured conductor temperature and ambient temperature as input values, its weakness and deficiency is in the fact that it does not make it possible to analyse the conductor geometry in case of additional mechanical loads, e.g. if a tree falls on the conductor or if ice accumulates on the conductor. Also this method does not take the electric load of the conductor into consideration; consequently, it is not possible to regulate the ampacity of the conductor to stop the accummulation of ice or to monitor the melting of ice. Apart from the temperature, the method does not foresee any other measurements; as a result, after the influence of ice or other permanent conductor extensions, it is necessary to carry out measurements with the LiDAR system again. Only occasional measurements of the catenary geometry, while continuously monitoring temperatures only, do not make it possible to monitor the geometry due to mechanical loads and due to ice.

According to patent document US 5,235.861, a system for monitoring the transmission power line, which is intended to determine the inclination or sag of the conductor based on the changes in tensile forces in the conductor, is known. The cell for measuring the forces is attached between the isolator and the unloading transmission power line tower. In such a way, it is possible to measure the changes in the inclination angle on the conductor with an inclinometer and, on the basis of a known vertical component of the force, it is possible to calculate the horizontal force in the conductor. Based on continuous monitoring of the changes in the tensile force in intervals 5 to 10 minutes, the changes in the height of the sag are monitored automatically. If the tensile force reaches its critical value, this value is sent to the control centre.

Although the system measures temperature loads of the conductor at two ends of the conductor and, at the same time, also the tensile force in the conductor near the tower and, on the basis of this, it determines the increase in the tensile force due to the accumulation of ice, it does not make it possible to calculate the thickness of the ice accumulated on the conductor and, in this way, the operator is limited when planning ampacity. Further weakness and deficiency is the additional cell for measuring force, which is separated from the instrument for measuring the temperature and the inclination placed on the conductor, which requires additional activity when assembling the system.

WO 2007/134022 A2 discloses a power line temperature and sag monitoring system.

US6097298A discloses an apparatus and method of monitoring a power transmission line.

CN20350199U discloses a power transmission line sag on-line monitoring device.

US2014123750A1 discloses a method and a system for monitoring a power transmission line of a grid.

EP2194623A1 discloses a power transmission line dip measurement method.

All previously described known solutions have in common that they do not make it possible to measure and calculate the thickness of ice on transmission power line conductors. If the operator of the electric distribution system does not know the thickness of ice when carrying out measurements, he is limited when making the important decision concerning the ampacity to prevent further accumulation and to ensure melting of the ice.

The problem that has not been solved up to now is how to monitor the geometry of the conductor catenary precisely in case of additional mechanical loads of the transmission power line conductor and when control monitoring the inclination of the conductor at the area where it is attached.

The described technical problem will be resolved with the method for determining additional mechanical loads of a transmission power line conductor according to claim 1. The method will, in addition to the calculation of the tensile forces in the conductor and of the inclination of the conductor, make it possible to determine at the same time the value of the additional load of the conductor due to ice or a fallen tree, depending on the average temperature of the conductor, of its inclination and of weather conditions in the environment. Based on monitoring the inclination of the conductor at the attachment point, it will be possible to determine the clearance at each optional point of the conductor, depending on the terrain configuration under the span between two transmission power line towers.

### Description of the invention

The essence of the method of determining additional mechanical load of a transmission power line conductor according to the applied for invention is in the fact that it, fairly simply and effectively, makes it possible to monitor the geometry of the conductor catenary precisely in case of additional mechanical loads and, at the same time, to carry out control monitoring of the inclination of the conductor in the area where it is attached. The geometry of the conductor catenary is determined by measuring the catenary at different temperatures of the conductor. For each measurement with the corresponding temperature, geometry characteristics of the conductor are determined within x-y coordinates for both attachment points on the console of the transmission power line tower and also for the lowest point on the catenary.

The method is based on two separated mechanical systems - from one attachment point of the conductor to the lowest point of the conductor and from this lowest point to the other attachment point of the conductor on the console of the tower.

To calculate the geometry of the conductor catenary, the following points within the span between two transmission power line towers are essential: points of attachment of the conductor to the console of one tower and to the console of the other tower, the lowest point of the conductor in the relative X-y 2D coordinate system, the point of attachment of the measurement device and the starting point of the relative x-y 2D coordinate system.

In case of the change in the angle in the point of attachment of the measurement device and the inclinometer, the method for determining the geometry of the catenary calculates the change in the geometry of the conductor catenary for the current measured temperature as the temperature of the conductor has an impact upon the conductor length. The theoretical equation of the actual temperature extension and shrinking of conductors differ from such theoretical parameters, acquired on the basis of geometry measurements at at least three different temperatures of the conductor.

The method according to the invention resolves the problem of determining the additional mechanical load of a transmission power line conductor in such a way that it makes it possible to define the change in the geometry of the conductor catenary along the entire span and the change in tensile forces in the conductor only by changing the inclination at one spot and at the same time by monitoring the changes in the conductor temperature.

In case of deviations between the measured angle of the inclination angle of the conductor at the point of attachment of the measurement device and the angle calculated with the applied for method for the corresponding temperature and for the foreseen geometry, it is possible to estimate the increase in the additional load as the increase in the additional tightening force at the spot of attachment of the conductor to the tower console.

By changing the conductor temperature, the conductor extension is changed at each side, i.e. at both ends. The mathematical algorithm carries out an iterative calculation separately for each side and various values of the lowest point are obtained; if the difference between the height of the conductor at the lowest point equals the desired value, e.g. half of the thickness of the conductor, the calculation stops and a new conductor geometry or the equation of the conductor catenary and the values of horizontal and normal forces in both points of attachment of the conductor appear. It namely applies that the thermical behaviour of the conductor depends not only on the coefficients of extension but also on the way of manufacturing and assembling the conductor, the time of using the conductor and on the endured external weather conditions when using the conductor. Because of this it is necessary to carry out several measurements of the geometry at various temperatures and to determine the change in the characteristic points of the catenary for both sides of the conductor, depending on the temperature.

When knowing the positions of the characteristic points of the conductor catenary in the form of x-y coordinates for both attachment points as well as for the lowest point on the catenary, depending on the temperature for an optional conductor temperature, an approximate conductor length must be defined and the described iterative procedure must be carried out for both sides of the same span of the conductor, with the aim of determining the tensile forces in the conductor.

The method takes the values, defined as control points of the conductor catenary, into consideration, i.e. the position of both points of its attachment and the lowest point of the conductor. Based on the input data, the conductor catenary, the tensile forces in the point of attachment of the conductor and the inclination angle at the point of attachment of the measurement device are defined. On the basis of the method, a computer program was made that compares the calculated inclination angle of the conductor with the measured inclination angle of the conductor. The method calculates the average difference between the measured and the calculated inclination angle and defines it with statistical certainty as a trend in a measurement interval that takes a longer period of time.

If the trend for the calculated angle in view of the conductor temperature and the measured angle for the measured temperature remains statistically the same, it means that there is no additional mechanical load on the conductor and data on the conductor geometry in the regular operating regime is displayed for the operator in the control centre.

If there is statistically significant change in the trend, it must be checked whether weather conditions are favourable for the occurrence of ice or for the accummulation of wet snow. If there are no weather conditions to result in an additional load of the conductor, it is necessary to statistically define the deviation characteristic and to evaluate the possibility of an additional mechanical load of the conductor to eleminate the error of measuring with an inclinometer.

If weather conditions are favourable for the accumulation of ice or wet snow on the conductor, the algorithm continues calculating in the subprogram Alarm-ice, taking the changes in the measured inclination angle into consideration; the length of the conductor catenary that is required for the inclination angle according to the method to equal the statistically relevant change in the measured inclination angle is calculated. The extension characteristic of the conductor is entered into the algorithm on the basis of laboratory tensile measurements of a certain conductor. The algorithm calculates the value of the change in the tensile forces that caused the extension of the conductor length. The change in the tensile strenght is the consequence of the increased weight of the conductor. The increase in weight represents the average weight of ice or wet snow along the conductor catenary at the observed span. Now the algorithm displays to the operator the details about the catenary geometry and also the average thickness of ice and calculates the time required for the ice to melt, if melting with electric current is possible. Under the condition of continuous measurements and if the change in the trend in the difference between the inclination angle of the conductor calculated according to the method and its measured angle stops, the condition of monitoring the accumulation of ice or snow on the conductor is stable and the model follows the changes concerning the increase in additional weight.

The stable condition on the conductor is ensured by supplying additional electric current into the high-voltage system. If in case of increased electric current, the trend in the change is increased, the accumulation of ice is extremely intense, which can cause the increase in tensile forces over the conductor strength and melting solely by increasing the electric current is no longer possible. On the basis of this information the operator can switch off the transmission power line from the transmission network in time to avoid the breakdown of towers or of the conductor itself.

In some other example, if the reduction of the angle at the measured spot is statistically significant, the ice started melting, which is noticed when the change in the trend reduction of the difference between the calculated and the measured inclination angle of the conductor can be noticed, because of which there is no longer any additional load on the conductor. The new conditions represent a new permanent geometry of the conductor catenary, with a new lowest point and the tensile forces at the attachment spot, which means that it is possible to continue the continuous monitoring of the transfer of electric energy into the transmission power line. By calculating the geometry of the conductor catenary again, the height of the conductor from an optional point above the ground is obtained.

If, after the accumulation and melting of the ice on the conductor, the change in the inclination angle at the spot of attachment of the measurement device is permanent, the method determines the length of the additional permanent extension and provides to the operator the information whether it is necessary to prestress the conductor, without the need to previously physically check the conductor height on the terrain. In this way, the operator obtains precise data about the length of the required shortening, i.e. of stressing the conductor again.

In view of all this, it applies that the method according to the invention is based on the development of a systematic method to determine additional mechanical loads of a transmission power line, which will enable as follows:
- calculation of the forces and the sag or the inclination of the conductor at an optional point in the span distance, depending on the temperature change, for determining the correct height of the tower on the route of the transmission power line;
- control of the safe distance of the conductor from the ground to prevent high-voltage power breakdown with regard to the ground configuration under the span in case of additional mechanical loads of the high-voltage conductor, based on the monitoring of the changes in the angle of inclination and in the temperature at the spot of attaching the conductor on the tower console,
- calculation of tensile forces at the point of attachment of the conductor on the tower, taking into account the temperature difference and the change in the inclination of the conductor at the point where the conductor is attached to the console,
- monitoring the geometry of the conductor and tensile forces in order to achieve the maximum utilization of transmitted electricity on the transmission power line, or the maximum thermal load of the conductor in view of the conductor temperature, the ampacity in the conductor and the ambient temperature,
- monitoring the geometry of the conductor and tensile forces in the conductor with additional mechanical loads and determining the average height of the ice or wet snow on the observed span,
- determining the input data for defining the melting time of the ice in view of the ampacity of the transmission power line and
- ensuring safe operation of the transmission power line while monitoring additional tensile forces in the conductor until the critical moment when the tensile forces could cause the collapse of the conductor or even of the transmission power line towers.

The invention is described in detail below, on the basis of a feasibility example and figures that indicate as follows:
- Fig. 1: presents the positions of individual elements of the span of the conductor between two transmission power line towers, required to carry out the method for determining additional mechanical loads of a transmission power line conductor according to the invention
- Fig. 2: diagram of calculation of forces on the basis of calculation of the balance of the conductor between one attachment point and another attachment point, i.e. between one and another transmission power line tower
- Fig. 3: diagram of the changes in the position of the conductor and of the changes in the distance from the attachment point to the lowest point of the conductor and of the changes in the tensile force in the conductor as a result of the changed inclination of the conductor

The reference numerals in the figures indicate as follows:
1- transmission power line tower
2- conductor
3- measurement device
4- weather station
5- measurement device
6- strain isolator
7- console
8- coordinate starting point
9- transmission power line tower
   F₁- tensile force in the conductor 2 at the attachment point in point T₁
   F₂- tensile force in the conductor 2 at the attachment point in point T2
   H₁- horizontal force
   V₁- vertical force
   L₁- length of the conductor 2 between the attachment point T₁ and the lowest point T₃
   L₂- length of the conductor 2 between the attachment point T₂ and the lowest point T₃
   T₀- the starting point of the relative x-y 2D coordinate system
   T₁- the attachment point of the conductor 2 to the console 7 of the first tower 1
   T₂- the attachment point of the conductor 2 to the console 7 of the second tower 9
   T₃- the lowest point of the conductor 2 in the relative x-y 2D coordinate system
   T₄- the attachment point of the measurement device 3 and the inclinometer on the conductor 2
   α - the measured inclination angle of the conductor 2
   α' - the calculated inclination angle of the conductor 2

Input data fort he use of the method according to the invention:
x- coordinate
w₁- horizontal distance between T₁ and T₃
w₂- horizontal distance between T₃ and T₂
w₃- horizontal distance between T₁ and T₄
w- horizontal distance between T1 and T2
y- coordinate
f₁- sag of the conductor 2 in view to the point T₁ or vertical difference between T₁ and T₃
f₂- sag of the conductor 2 in view to the point T₂ or vertical difference between T₂ and T₃

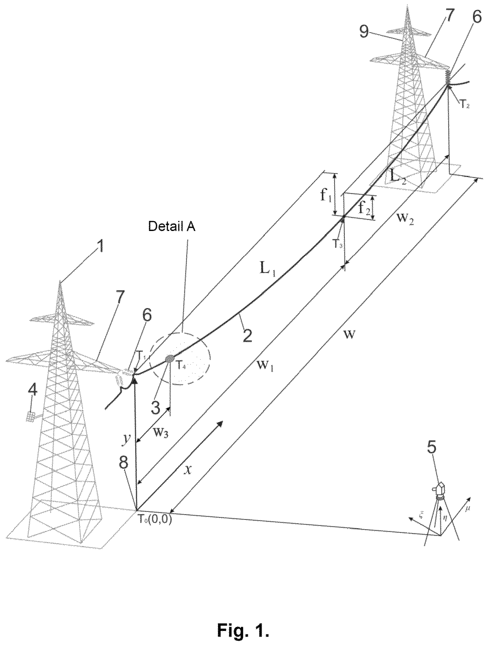

Fig. 1 presents the position of individual elements of the span of a conductor 2 between neighbouring transmission power line towers 1 and 9. The ends of the conductor 2 are attached to the corresponding strain isolator 6, which is attached to a console 7 on the transmission power line tower 1 and to a console 7 on the transmission power line 9. In point T₄, a measurement device 3 is attached to the conductor 2 to measure the temperature of the conductor 2 and also to measure the electric current, in addition an inclinometer is attached to measure the inclination of the conductor. The geometry of the conductor 2 catenary is determined on the basis of measurements of the catenary, carried out at different temperatures of the conductor 2. The measurement can be carried out in the global coordinate system χ,ν,µ with a measurement device 5, which can be a laser measurement device or some other appropriate measurement device. It applies that the measurement must be carried out with an adequate number of points, from the point of attachment T₁ of the conductor 2 on the transmission power line tower 1 to the point T₂ on the transmission power line tower 9 to determine the conductor 2 catenary as precisely as possible in the relative coordinate system x-y that has the coordinate starting point 8 in point T₀ (0,0). Based on such measurements of the conductor 2 catenary, relative 2D coordinates of charactersitic points of the catenary are defined. These are coordinates of the points of attachments T₁ and T₂, coordinates of the lowest point T₃ of the conductor 2 catenary and the coordinates of the point of attachment T₄ of the measurement device 3 for measuring the temperature and inclination of the conductor 2.

Measurements with a larger number of points of the conductor 2 catenary must be carried out at various temperatures of the conductor 2 in order to cover as large a span of its temperature load as possible. It is evident from Fig. 1 that on the basis of the coordinates of points T₁, T₂ and T₃, the vertical sag f₁ in the direction y is determined, which represents the difference between the heights of the points T₁ and T₃, and the vertical sag f₂ as the difference between the points T₂ and T₃. In the horizontal direction x, the distance w₁ as a horizontal difference is defined between the points T₁ and T₃ and the rest of the span w₂ between the points T₃ and T₂. The lenght L₁ of the conductor 2 between the points T₁ and T₃ and the length of the conductor L₂ between the points T₃ and T₂ are calculated with the integration of the measured sections.

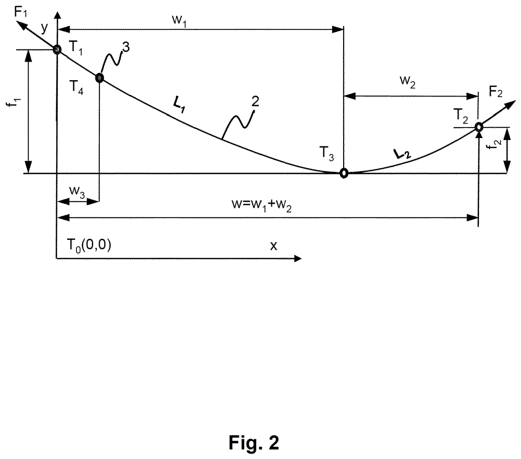

The method for calculating the tensile force F₁ in point T₁ and the tensile force F₂ in point T₂ of the conductor 2 is based on the calculation of balance in point T₃ between two mechanical systems, from one point of attachment T₁ to the lowest point T₃ and from the lowest point T₃ to the other point of attachment T₂, as shown in Fig. 2. The position of the measurement device 3 is indicated in point T₄, which is located in the distance w₃ from the coordinate starting point 8 in point T₀. In the balanced condition, the weight of the conductor 2 has an impact upon the tensile forces F1 and F2 and, consequently, on the position of characteristic points T₁, T₂ and T₃.

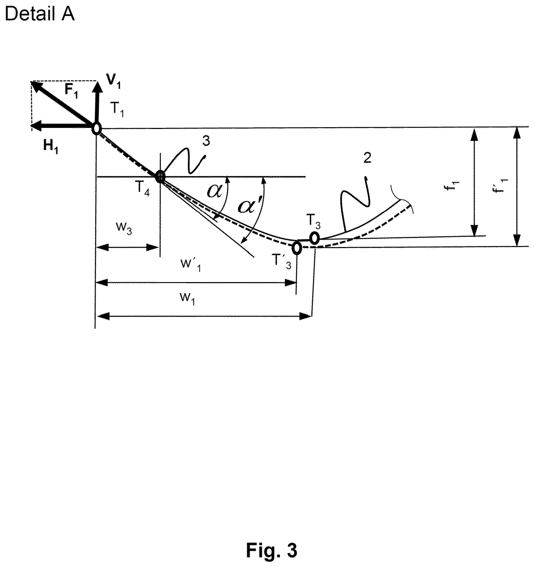

Fig. 3 shows that if changes in the inclination of the conductor 2 from the calculated inclination angle α' to the measured inclination angle α are detected, in point T₄ of attachment of the measurement device 3 the position is changed from the lowest point T'₃ to the point T₃ and also the horizontal distance w₁ is changed to w'₁, consequently, the values of tensile forces F1 and F2 in the conductor and their horizontal and vertical components are changed. If the inclination angle α' in point T₄ at the spot of attachment of the measurement device 3 and inclinometer is changed when measuring temperature, the change in the geometry of the conductor 2 catenary is calculated according to the applied for method, also it is checked whether the angle α' and the temperature of the conductor 2 match. Compliance between temperature and angle α or angle α' of the conductor 2 is checked on the basis of the measured length of the conductor 2 as this length has an impact upon the change in the position of the lowest point T₃ of the conductor 2. As the condition and the age of the conductor 2 have an impact upon its thermic extension/shrinking, deviations from theoretical temperature extension coefficients of the conductor 2 appear. This is why the method according to the invention is based on geometry parameters, acquired on the basis of measuring the geometry at at least three different temperatures of the conductor 2. The results of geometry measurements are saved in the database for a computer program.

Determining an additional mechanical load of the conductor 2 according to the method is solved in such a way that determining an additional mechanical load is possible only by monitoring the difference between the inclination angle α' and the inclination angle α of the conductor 2 at one spot, at the same time the changes in the temperature of the conductor 2 are monitored. Based on this, it is possible to determine the change in the geometry of the conductor 2 catenary along the entire span between the transmission power line towers 1 and 9 and the change in tensile forces F₁ and F₂ in the conductor 2. In case of deviations between the measured inclination angle α of the conductor 2 in the point of attachment of the measurement device 3 in point T₄ and the calculated inclination angle α' and between the calculated angle of inclination α' and the measured angle α, the geometry of the conductor 2 catenary is calculated according to the applied for method for the corresponding temperature of the conductor 2; it is possible to estimate the increase in the additional load of the conductor 2 as the increase in additional tensile forces F₁ and F₂ at the point of attachment of the conductor 2 to the console. In relation to this it is possible to estimate, for the foreseen geometry, the increase in the additional load of the conductor 2 in the sense of the increase of the additional tightening force F₁ at the spot of attachment of the conductor 2 to the console 7 of the transmission power line tower 1 or 9.

It applies that strength equations that take the conductor 2 weight, its thermic extension and the measured conductor 2 geometry into consideration are formed specially for the area of the conductor 2 in the area from the attachment point T₁ to its lowest point T₃ and from this lowest point T₃ to the opposite attachment point T₂. By changing the conductor 2 temperature, both its lengths L₁ and L₂, i.e. lengths to the left and to the right from the lowest point T₃, change. The mathematical algorithm for each length, L₁ and L₂, specially carries out iterative calculation. The result includes different heights of the lowest point T₃ and T'₃. If the difference between the height of the conductor 2 from the ground in the lowest point T₃ or T'₃ is the same for the left and for the right side with deviations within the half of the conductor 2 thickness, the calculation stops and a new conductor 2 geometry appears, represented by the position of the attachment points T₁, T₂ and the position of the lowest point T₃, and also the values of horizontal forces H₁ and vertical forces V₁ in the attachment point T₁. The same applies for the attachment point T₂. As previously mentioned, the thermical behaviour of the conductor 2 depends not only on extension coefficients but also on the mode of manufacturing and assembling the conductor 2, on the time of its use and on external weather conditions.

For input data, the method takes the values into consideration that are defined as control points of the conductor 2 catenary, i.e. the position of both attachment points T₁, T₂ and the position of the lowest point T₃.

When knowing the position of all the characteristic points of the conductor 2 catenary, in the form of x-y coordinates for both attachment points T₁ and T₂ as well as for the lowest point T₃ on the catenary and depending on the conductor temperature, an approximate conductor 2 length is determined and the described iterative procedure is carried out to determine the tensile forces F₁ and F₂ for both sides of the same span of the conductor 2. This is shown in Figures 1 and 2. Based on the conductor 2 catenary, the inclination angle α' is determined, i.e. calculated in the point T₄ of attachment of the measurement device 3. Then the program compares the calculated inclination angle α' and the measured inclination angle α in point T₄, where the measurement device 3 is attached to the conductor 2, as shown in Fig. 3.

Then, with the method according to the invention, the average difference between the inclination angles α' and α is calculated, afterwards this difference is defined with statistical certainty as a trend in a longer measurement interval, e.g. in 5 minutes. If the trend in the difference between the angles α' and α remains statistically the same, the method notifies that there are no additional mechanical loads of the conductor 2. In such a case, the data on the conductor 2 geometry in the regular operating regime is displayed to the operator - for all control height points under the conductor 2. As mentioned, this applies for the calculated inclination angle α' of the conductor 2 in view of the conductor 2 temperature and for the measured inclination angle α of the conductor 2 for the measured temperature.

In case of a statistically significant change in the trend between the calculated inclination angle α' and the measured inclination angle α, it is checked by means of the weather station 4 if the weather conditions are favourable for the occurrence of ice or for the accumulation of wet snow on the conductor 2 as shown in Fig. 1. If there are no weather conditions that can cause the occurence of ice and, consequently, an additional load of the conductor 2, however, statistically characteristic deviations between the inclination angle α' calculated according to the applied for method and the measured inclination angle α occur, the program of the method notifies that an additional mechanical load of the conductor is due to a fallen tree or due to a similar reason.

In case of the weather conditions that are favourable for the occurrence of ice or the accumulation of wet snow on the conductor 2, the calculation according to the applied for method continues in the subprogram (Alarm-ice). The extension of the conductor 2 is caused by an additional tensile force F₁ or F₂ on the conductor 2, which is the consequence of the additional weight of the ice. In the algorithm (Alarm-ice), the length of the conductor 2 catenary, required to obtain the change in the calculated inclination angle α' according to the method, is the same as the statistically relevant change in the measured inclination angle α. This applies in case of previous consideration of the established change in the measured inclination angle α of the conductor 2. The characteristic of the tensile force F₁ or F₂ in regard to the extension of the conductor 2, is entered into the algorithm on the basis of lab tensile measurements of the conductor 2. The algorithm calculates the value of the change in tensile forces F₁ and F₂ that caused the increase in the length of the conductor 2, indicated as the change in the inclination angle α or the inclination angle α'. The change in the tensile forces F₁ and/or F₂ is the result of the increased weight along the length unit of the conductor 2. The increased weight of the conductor 2 represents the average weight of the ice or snow along the conductor 2 catenary in the observed span. Now the algorithm displays to the operator the data on the catenary geometry and on the average thickness of the ice on the conductor 2, and calculates the time required for the ice to melt if it is possible to melt it with the electric current. The method makes it possible to increase the electric current in the conductor 2 in such case on time.

Under the condition of continuous measurements and if the change in the trend in the difference between the inclination angle α' calculated according to the method and the measured inclination angle α stops, the monitoring of the accumulation of ice on the conductor 2 is stable and the method continuously monitors the changes in increasing the weight of the conductor 2. The method makes it possible, for additional electric current in the conductor 2, to calculate at the same time also the time required for the ice to melt, depending on the current temperature of the conductor 2 and the air temperature.

If the trend in the change increases in case of increased electric current, ice accumulates extremely intensely, which can cause the increase in tensile forces F₁ and F₂ over the strenght of the conductor 2 and the increased electric current is no longer sufficient to melt the ice. Based on this information, the operator swithces the transmission power line off from the network on time before the breakdown of the conductor 2 and/or the transmission power line towers 1 and 9. By doing so, the transmission power line no longer represents the risk of an electric shock on the objects under the conductor 2.

In some other example, when in case of increased electric current in the conductor 2, the inclination angle α' or the inclination angle α' is statistically significantly reduced at the measured spot, ice melts, which is detected after the change in the decrease in the trend in the difference between both inclination angles α and α' stops. It is detected as the additional load of the conductor 2 can no longer be detected. The new conditions represent new permanent geometry of the conductor 2 catenary, with the new lowest points T₃ and T'₃ and tensile forces F₁ and F₂ at the point of attachment of the conductor 2 in point T₁ and further continuous monitoring of the transmission of electric energy on the transmission power line is continued. By repetead calculation of the geometry of the conductor 2 catenary, a new starting height of the conductor 2 from an optional point above the ground is obtained.

If, after previously described accumulation and melting of ice, the change in the inclination angle α' of the conductor 2 and the inclination angle α in point T₄ of the attachment of the measurement device 3 is permanent, the method defines the lenght of the additional permanent extension of the conductor 2 and provides to the operator the information, whether it is required to prestress the conductor 2, without the need to physically check the height of the conductor 2 in the terrain. In this way, the operator obtains precise data about the lenght that needs to be shortened and about repeated stressing of the conductor 2.

## Claims

1. A method for determining additional mechanical loads of a transmission power line conductor (2), wherein the two ends of the conductor (2) are attached to the consoles (7) of neighbouring transmission power line towers (1, 9) so as to define two attachment points T1 and T2,
the method **characterised in that** it comprises the following steps:
determining the initial geometry of a conductor (2) catenary by measuring the catenary at different temperatures of the conductor (2) and saving the results of geometry measurements in a database for a computer program, subsequently, for determining additional mechanical loads, measuring the temperature of the conductor (2) with a measurement device (3) attached to the conductor (2) at a point T₄ and simultaneously measuring an inclination angle (α) of the conductor (2), determining, based on the measured temperature, a calculated inclination angle (α'), comparing the calculated inclination angle (α') to the measured inclination angle (α), determining additional mechanical loads based on the deviation between the calculated inclination angle (α') from the measured inclination angle (α).

2. Method according to claim 1, wherein the step of comparing the calculated inclination angle (α') of the conductor (2) to the measured inclination angle (α) of the conductor (2) comprises calculating the average difference between the measured and the calculated inclination angle and defining it with statistical certainty as a trend in a measurement interval that takes a longer period of time.

3. Method according to claim 1 or 2, further comprising measuring surrounding weather conditions by a weather station (4) such as a surrounding air temperature and a surrounding air humidity by a weather station (4), determining, based on the measured surrounding air temperature and the measured surrounding air humidity, whether the additional mechanical load is ice or wet snow or other, such as wood of a fallen tree.

4. Method according to one of the foregoing claims, further comprising, when there is no longer any additional load on the conductor (2), determining a new permanent geometry of the transmission power line conductor (2), if the reduction of the angle at the measured spot is determined to be statistically significant, which is noticed when the change in the trend reduction of the difference between the calculated inclination angle (α') and the measured inclination angle (α) of the conductor (2) can be noticed, and calculating a new conductor (2) catenary based on the measured inclination angle (α) of the conductor (2).

5. Method according to one of the foregoing claims, further comprising measuring the inclination angle and calculating the conductor (2) catenary based on the measured inclination angle separately from a first attachment point (T1) of the conductor (2) to the lowest point of the conductor (2) and from the lowest point of the conductor (2) to the second attachment point (T2) of the conductor (2) of a transmission power line, and calculating the tensile force in the first attachment point (T1) of the conductor (2) and calculating the tensile force in the second attachment point (T2) of the conductor (2).

6. The method according to one of the foregoing claims, **characterised by the fact** that the typical characteristic of the conductor (2) deformation in relation to a tensile force (F1) in the first attachment point of the conductor and a tensile force (F2) in a second attachment point of the conductor is defined experimentally and is written in the form of coefficients of a linear equation in an algorithm.

7. The method according to one of the foregoing claims, **characterized by the fact** that the difference between the calculated inclination angle (α') of the conductor (2) and the measured inclination angle (α) is increasing in case of an additional increase in the thickness of the ice on the conductor (2) or in case of a tree fallen on the conductor (2).

8. The method according to one of the foregoing claims, **characterized by the fact** that the change in the trend in the difference between the calculated inclination angle (α') and the measured inclination angle (α) of the conductor (2) remains the same if, by means of ampacity, the thickness of ice on the conductor (2) is maintained at the same level, which represents a stationary condition of the conductor (2).

9. The method according to one of the foregoing claims, **characterised by the fact** that the change in the trend in the difference between the calculated inclination angle (α') and the measured inclination angle (α) decreases when the ice on the conductor (2) melts.

10. The method according to one of the foregoing claims, **characterised by the fact** that, based on the simulation calculation of control heights above the objects and trees under the conductor (2) and through the entire temperature interval, it provides the operator in the control centre with the information, whether it is required to prestress the conductor (2) without previously checking physically the heights of the conductor (2) in the transmission power line route.

## Patentansprüche

1. Verfahren zum Bestimmen zusätzlicher mechanischer Belastungen eines Leiters (2) einer Übertragungsstromleitung, wobei die beiden Enden des Leiters (2) an den Konsolen (7) benachbarter Übertragungsstromleitungsmasten (1, 9) derart angebracht sind, dass zwei Anbringungsstelle T1 und T2 definiert werden,
wobei das Verfahren **dadurch gekennzeichnet ist, dass** es die folgenden Schritte umfasst: Bestimmen der anfänglichen Geometrie der Seilkurve eines Leiters (2) durch Messen der Seilkurve bei unterschiedlichen Temperaturen des Leiters (2) und Speichern der Ergebnisse von Geometriemessungen in einer Datenbank für ein Computerprogramm, anschließend zum Bestimmen zusätzlicher mechanischer Belastungen, Messen der Temperatur des Leiters (2) mit einer Messvorrichtung (3), die an dem Leiter (2) an einer Stelle T₄ angebracht ist, und gleichzeitig Messen eines Neigungswinkels (α) des Leiters (2), Bestimmen basierend auf der gemessenen Temperatur, eines berechneten Neigungswinkels (α'), Vergleichen des berechneten Neigungswinkels (α') mit dem gemessenen Neigungswinkel (α), Bestimmen zusätzlicher mechanischer Belastungen basierend auf der Abweichung zwischen dem berechneten Neigungswinkel (α') und dem gemessenen Neigungswinkel (α).

2. Verfahren nach Anspruch 1, wobei der Schritt des Vergleichens des berechneten Neigungswinkels (α') des Leiters (2) mit dem gemessenen Neigungswinkel (α) des Leiters (2) das Berechnen der mittleren Differenz zwischen dem gemessenen und dem berechneten Neigungswinkel und sein Definieren mit statistischer Sicherheit als ein Trend in einem Messintervall, der eine längere Zeitspanne benötigt, umfasst.

3. Verfahren nach Anspruch 1 oder 2, das weiter das Messen von Umgebungswitterungsbedingungen durch eine Wetterstation (4), wie einer Umgebungslufttemperatur und Umgebungsluftfeuchtigkeit durch eine Wetterstation (4), das Bestimmen basierend auf der gemessenen Umgebungslufttemperatur und der gemessenen Umgebungsluftfeuchtigkeit, ob die zusätzliche mechanische Belastung Eis oder nasser Schnee oder etwas Anderes, wie Holz eines umgestürzten Baums, ist, umfasst.

4. Verfahren nach einem der vorstehenden Ansprüche, das weiter, wenn keine zusätzliche Belastung mehr auf dem Leiter (2) besteht, das Bestimmen einer neuen dauerhaften Geometrie des Leiters (2) der Übertragungsstromleitung, falls bestimmt wird, dass die Verringerung des Winkels an der gemessenen Stelle statistisch signifikant ist, was bemerkt wird, wenn die Änderung der Trendverringerung der Differenz zwischen dem berechneten Neigungswinkel (α') und dem gemessenen Neigungswinkel (α) des Leiters (2) bemerkt werden kann, und das Berechnen einer neuen Seilkurve des Leiters (2) basierend auf dem gemessenen Neigungswinkel (α) des Leiters (2) umfasst.

5. Verfahren nach einem der vorstehenden Ansprüche, das weiter das Messen des Neigungswinkels und das Berechnen der Seilkurve des Leiters (2) basierend auf dem gemessenen Neigungswinkel separat von einer ersten Anbringungsstelle (T1) des Leiters (2) zu der niedrigsten Stelle des Leiters (2) und von der niedrigsten Stelle des Leiters (2) zu der zweiten Anbringungsstelle (T2) des Leiters (2) einer Übertragungsstromleitung, und das Berechnen der Spannkraft in der ersten Anbringungsstelle (T1) des Leiters (2) und das Berechnen der Spannkraft in der zweiten Anbringungsstelle (T2) des Leiters (2) umfasst.

6. Verfahren nach einem der vorstehenden Ansprüche, **dadurch gekennzeichnet, dass** die typische Charakteristik der Verformung des Leiters (2) in Bezug auf eine Spannkraft (F1) in der ersten Anbringungsstelle des Leiters und auf eine Spannkraft (F2) in einer zweiten Anbringungsstelle des Leiters experimentell definiert wird und in der Form von Koeffizienten einer linearen Gleichung in einem Algorithmus geschrieben wird.

7. Verfahren nach einem der vorstehenden Ansprüche, **dadurch gekennzeichnet, dass** die Differenz zwischen dem berechneten Neigungswinkel (α') des Leiters (2) und dem gemessenen Neigungswinkel (α) im Fall einer zusätzlichen Erhöhung der Dicke des Eises auf dem Leiter (2) oder im Fall eines Baums, der auf den Leiter (2) umgestürzt ist, zunimmt.

8. Verfahren nach einem der vorstehenden Ansprüche, **dadurch gekennzeichnet, dass** die Änderung des Trends der Differenz zwischen dem berechneten Neigungswinkel (α') und dem gemessenen Neigungswinkel (α) des Leiters (2) gleich bleibt, falls mittels zulässiger Stromstärke in Ampere die Dicke des Eises auf dem Leiter (2) auf demselben Niveau, das einen stationären Zustand des Leiters (2) darstellt, gehalten wird.

9. Verfahren nach einem der vorstehenden Ansprüche, **dadurch gekennzeichnet, dass** die Änderung des Trends der Differenz zwischen dem berechneten Neigungswinkel (α') und dem gemessenen Neigungswinkel (α) abnimmt, wenn das Eis auf dem Leiter (2) schmilzt.

10. Verfahren nach einem der vorstehenden Ansprüche, **dadurch gekennzeichnet, dass** basierend auf der Simulationsberechnung von Kontrollhöhen über den Objekten und Bäumen unter dem Leiter (2) und über das gesamte Temperaturintervall dem Bediener in der Leitstelle Informationen darüber bereitgestellt werden, ob es erforderlich ist, den Leiter (2) vorzubelasten, ohne vorab physisch die Höhen des Leiters (2) auf dem Verlauf der Übertragungsstromleitung zu prüfen.

## Revendications

1. Procédé pour la détermination de charges mécaniques supplémentaires d'un conducteur (2) de ligne de puissance de transmission, dans lequel les deux extrémités du conducteur (2) sont raccordées aux consoles (7) de tours (1, 9) voisines de ligne de puissance de transmission de manière à définir deux points de raccordement T1 et T2,
le procédé étant **caractérisé en ce qu'**il comprend les étapes suivantes :
la détermination de la géométrie initiale d'une caténaire du conducteur (2) par la mesure de la caténaire à des températures différentes du conducteur (2) et l'enregistrement des résultats de mesures de géométrie dans une base de données pour un programme informatique, puis, pour la détermination de charges mécaniques supplémentaires, la mesure de la température du conducteur (2) avec un dispositif de mesure (3) raccordé au conducteur (2) à un point T₄ et simultanément la mesure d'un angle d'inclinaison (α) du conducteur (2), la détermination, sur la base de la température mesurée, d'un angle d'inclinaison (α') calculé, la comparaison de l'angle d'inclinaison (α') calculé à l'angle d'inclinaison (α) mesuré, la détermination de charges mécaniques supplémentaires sur la base de l'écart entre l'angle d'inclinaison (α') calculé et l'angle d'inclinaison (α) mesuré.

2. Procédé selon la revendication 1, dans lequel l'étape de la comparaison de l'angle d'inclinaison (α') calculé du conducteur (2) à l'angle d'inclinaison (α) mesuré du conducteur (2) comprend le calcul de la différence moyenne entre l'angle d'inclinaison mesuré et l'angle d'inclinaison calculé et la définition de celle-ci avec une certitude statistique en tant qu'une tendance dans un intervalle de mesure qui prend une période de temps plus longue.

3. Procédé selon la revendication 1 ou 2, comprenant en outre la mesure de conditions météorologiques ambiantes par une station météorologique (4) comme une température d'air ambiant et une humidité d'air ambiant par une station météorologique (4), la détermination, sur la base de la température d'air ambiant mesurée et de l'humidité d'air ambiant mesurée, si la charge mécanique supplémentaire est de la glace ou de la neige mouillée ou autre, comme du bois d'un arbre tombé.

4. Procédé selon l'une des revendications précédentes, comprenant en outre, lorsqu'il n'y a plus de charge supplémentaire sur le conducteur (2), la détermination d'une nouvelle géométrie permanente du conducteur (2) de ligne de puissance de transmission, s'il est déterminé que la réduction de l'angle à l'endroit mesuré est statistiquement significative, ce qui est constaté lorsque le changement de la réduction de tendance de la différence entre l'angle d'inclinaison (α') calculé et l'angle d'inclinaison (α) mesuré du conducteur (2) peut être constaté, et le calcul d'une nouvelle caténaire du conducteur (2) sur la base de l'angle d'inclinaison (α) mesuré du conducteur (2).

5. Procédé selon l'une des revendications précédentes, comprenant en outre la mesure de l'angle d'inclinaison et le calcul de la caténaire du conducteur (2) sur la base de l'angle d'inclinaison mesuré séparément depuis un premier point de raccordement (T1) du conducteur (2) jusqu'au point le plus bas du conducteur (2) et depuis le point le plus bas du conducteur (2) jusqu'au deuxième point de raccordement (T2) du conducteur (2) d'une ligne de puissance de transmission, et le calcul de la force de traction dans le premier point de raccordement (T1) du conducteur (2) et le calcul de la force de traction dans le deuxième point de raccordement (T2) du conducteur (2).

6. Procédé selon l'une des revendications précédentes, **caractérisé par le fait que** la caractéristique type de la déformation du conducteur (2) par rapport à une force de traction (F1) dans le premier point de raccordement du conducteur et à une force de traction (F2) dans un deuxième point de raccordement du conducteur est définie expérimentalement et est écrite sous la forme de coefficients d'une équation linéaire dans un algorithme.

7. Procédé selon l'une des revendications précédentes, **caractérisé par le fait que** la différence entre l'angle d'inclinaison (α') calculé du conducteur (2) et l'angle d'inclinaison (α) mesuré augmente en cas d'augmentation supplémentaire de l'épaisseur de la glace sur le conducteur (2) ou en cas de chute d'arbre sur le conducteur (2).

8. Procédé selon l'une des revendications précédentes, **caractérisé par le fait que** le changement de la tendance de la différence entre l'angle d'inclinaison (α') calculé et l'angle d'inclinaison (α) mesuré du conducteur (2) reste le même si, sous l'effet d'un courant admissible, l'épaisseur de glace sur le conducteur (2) est maintenue au même niveau, ce qui représente un état stationnaire du conducteur (2).

9. Procédé selon l'une des revendications précédentes, **caractérisé par le fait que** le changement de la tendance de la différence entre l'angle d'inclinaison (α') calculé et l'angle d'inclinaison (α) mesuré diminue lorsque la glace sur le conducteur (2) fond.

10. Procédé selon l'une des revendications précédentes, **caractérisé par le fait que**, sur la base du calcul de simulation de hauteurs de contrôle au-dessus des objets et des arbres sous le conducteur (2) et dans tout l'intervalle de températures, il fournit, à l'opérateur au centre de commande, les informations indiquant s'il est nécessaire ou non de précontraindre le conducteur (2) sans préalablement vérifier physiquement les hauteurs du conducteur (2) sur le trajet de la ligne de puissance de transmission.
